# EUROPÄISCHE PATENTSCHRIFT

(11) **EP 3 514 395 B1**
(45) Veröffentlichungstag und Bekanntmachung des Hinweises auf die Patenterteilung: **31.07.2024**
(21) Anmeldenummer: 18152534.6
(22) Anmeldetag: 19.01.2018
(51) Int. Cl.: F16B 37/06

(54) **BLINDNIETSCHRAUBE**
BLIND RIVET SCREW
RIVET FILETÉ AVEUGLE

(43) Veröffentlichungstag der Anmeldung: 24.07.2019
(73) Patentinhaber: SFS Group Germany GmbH, 61440 Oberursel (DE)
(72) Erfinder: Bamberger, Thomas, 64546 Mörfelden-Walldorf (DE); Dr. Gärtner, Richard, 64546 Mörfelden-Walldorf (DE); Schulz, Alexander, 64546 Mörfelden-Walldorf (DE)
(74) Vertreter: Keil & Schaafhausen Patentanwälte PartGmbB

(56) Entgegenhaltungen:
- EP-A1- 1 918 596
- EP-A1- 2 594 813
- EP-A1- 2 910 801
- DE-A1- 10 001 301
- DE-A1- 10 126 747

## Beschreibung

Die vorliegende Erfindung betrifft eine Anordnung mit einer Blindnietschraube, einem Fügegut und einem Anschraubgut nach dem Anspruch 1.

Eine Blindnietschraube mit Fügegut ist beispielsweise aus EP 2 594 813 A1 bekannt.

Eine derartige Blindnietschraube wird nach Art eines Blindniets in einer Struktur befestigt, die im Folgenden kurz als "Fügegut" bezeichnet wird. Bei der Struktur kann es sich um eine einzelne Platte oder ein Blech handeln. Es kann aber auch um einen Stapel aus zwei oder mehr plattenartigen Gegenständen handeln.

Nach dem Setzen der Blindnietschraube steht der Bolzen mit dem Außengewinde zur Verfügung, um an dem Fügegut weitere Teile zu befestigen. Beispielsweise kann man eine derartige Blindnietschraube in einem Kraftfahrzeug verwenden, um eine Airbag-Einheit mit der Karosserie des Kraftfahrzeugs zu verbinden.

Allgemein ist ein bevorzugtes Anwendungsgebiet einer derartigen Blindnietschraube die Fahrzeugtechnik, die nicht nur Personenkraftwagen, sondern auch LKW, Eisenbahnwaggons und Flugzeuge umfasst. In diesem Bereich spielt das Gewicht oder die Masse der verwendeten Teile eine relativ große Rolle, weil bei der Bewegung eines derartigen Fahrzeugs diese Masse beschleunigt und abgebremst werden muss.

DE 100 01 301 A1 zeigt eine Gewindemutter, bei der ein Innengewinde vom Setzkopf ausgeht und ein Umformbereich zum Ausbilden eines Schließkopfs vorgesehen ist, bei dem das Gewinde nicht mehr erforderlich ist.

DE 101 26 747 A1 zeigt eine Blindnietmutter und eine Befestigungseinheit, bei der am Setzkopf ein verformbarer Fortsatz vorgesehen ist, der in eine Nut an einer Schraube einrasten kann, die in die Blindnietmutter eingeschraubt ist.

EP 2 910 801 A1 zeigt einen Blindnietbefestiger, der sowohl auf Seiten des Setzkopfes als auch auf Seiten des Schließkopfes einen Bolzen mit einem Außengewinde aufweist.

Der Erfindung liegt die Aufgabe zugrunde, eine Blindnietschraube mit kleiner Masse bereitzustellen.

Diese Aufgabe wird bei einer Blindnietschraube der eingangs genannten Art dadurch gelöst, dass der Gewindeabschnitt bei ausgebildetem Schließkopf maximal vier Gewindegänge plus 1 mm länger ist alsdie maximale Dicke des Aschraubguts, der Gewindeabschnitt bei unverformter Niethülse jedoch vier Gewindegänge über die Niethülse vorsteht, gemäß Anspruch 1.

Mit einer derartigen Ausbildung kann die Masse der Blindnietschraube auf ein Minimum beschränkt werden. Der Gewindeabschnitt, der aus dem Setzkopf vorsteht, weist lediglich maximal vier Gewindegänge plus 1 mm auf. Lediglich diese Länge steht damit zum Aufschrauben einer Mutter oder dergleichen zur Verfügung. Diese Länge reicht aber aus, weil bei einer Schraubverbindung zwischen einem Innengewinde und einem Außengewinde ohnehin die Hauptlast der Gewindeverbindung von drei Gewindegängen getragen wird. Wenn der Gewindeabschnitt bei dem ausgebildeten Schließkopf nur um maximal vier Gewindegänge plus 1 mm plus die Dicke des Anschraubgut-Sollbereichs aus der Niethülse vorsteht, dann kann es allerdings sein, dass im unverformten Zustand der Niethülse die aus der Niethülse vorstehende Länge des Gewindeabschnitts zu kurz ist, um ein Werkzeug angreifen zu lassen, das durch Aufbringen einer Zugkraft den Schließkopf erzeugt. Um sicherzustellen, dass ein Werkzeug auf jeden Fall angreifen kann, geht der Gewindeabschnitt mit mindestens vier Gewindegängen aus der Niethülse vor. Eine derartige Situation kann sich beispielsweise dann ergeben, wenn die Dicke des Fügeguts wesentlich größer ist als die Dicke des Anschraubguts. Die Dicke des Anschraubguts, das mit der Blindnietschraube an dem Fügegut befestigt werden soll, bestimmt den Anschraubgut-Sollbereich. Die Länge des Gewindeabschnitts ist also definiert zu mindestens 4 Gewindegängen bei unverformter Niethülse und, sofern sie bei verformter Niethülse mit ausgebildetem Schließknopf dann länger sein könnte, zu maximal 4 Gewindegängen plus 1 mm plus Anschraubgut-Sollbereich.

Bevorzugterweise ist der Gewindeabschnitt bei ausgebildetem Schließkopf maximal vier Gewindegänge länger als der Anschraubgut-Sollbereich. Man spart sich damit die um 1 mm längere Ausbildung der zuvor beschriebenen Ausführungsform. Auch hier gilt allerdings, dass der Gewindeabschnitt bei unverformter Niethülse mindestens vier Gewindegänge über die Niethülse vorsteht.

Vorzugsweise weist der Verbindungsbereich mindestens ein Loch auf. Der Verbindungsbereich zwischen dem Bolzen und der Niethülse ist bei einer Blindnietschraube praktisch nur auf Zug belastet. Wenn man hier Material entfernt, lässt sich eine weitere Einsparung bei der Masse der Blindnietschraube erzielen.

Vorzugsweise weist der Verbindungsbereich an seinem vom Setzkopf abgewandten Ende eine radial nach innen weisende Bolzenanlagewand aufweist, wobei die Bolzenanlagewand vorzugsweise geschlossen ist und insbesondere eine Kontur aufweist, die von einer Ebene abweicht. Bei einer derartigen Blindnietschraube ist der Bolzen in die Niethülse, genauer gesagt in den Verbindungsbereich der Niethülse eingeschraubt und zwar so lange, bis er an der Bolzenanlagewand zur Anlage kommt. Wenn bei diesem Einschrauben ein ausreichendes Drehmoment aufgebracht wird, ergibt sich ein Verklemmen zwischen dem Bolzen und dem Verbindungsbereich, was in der Regel ausreicht, um den Bolzen zuverlässig in der Niethülse zu halten. Es hat sich allerdings herausgestellt, dass der größte Teil der Anlagekraft von einem Bereich der Bolzenanlagewand aufgenommen wird, der radial außen liegt. Dementsprechend kann man sich darauf beschränken, die Bolzenanlagewand dort dick zu machen, während sie radial weiter innen eine verminderte Dicke aufweisen kann. Die Dickenverminderung der Bolzenanlagewand kann rampenförmig erfolgen. Im Extremfall kann man in der radialen Mitte der Bolzenanlagewand auch ein Loch vorsehen, um Masse zu sparen.

Vorzugsweise weist der Verbindungsbereich ein Gewinde mit maximal zwei Gewindegängen auf. Eine derartige Verbindung reicht aus, um die gewünschten Verspannungskräfte zu erzielen. Mit zwei Gewindegängen ist der Verbindungsbereich in axialer Richtung (bezogen auf die Achse des Bolzens) relativ kurz, so dass man auch hier Material und damit Masse einsparen kann.

In einer alternativen Ausgestaltung ist vorgesehen, dass der Bolzen im Verbindungsbereich eine gewindefreie Haltekontur aufweist. Diese Haltekontur kann beispielsweise in einer axial verlaufenden Verzahnung bestehen. In diesem Fall wird beim Herstellen der Blindnietschraube eine Niethülse im Verbindungsbereich auf den Bolzen, genauer gesagt seine Haltekontur, aufgepresst.

In einer weiteren Ausgestaltung ist vorgesehen, dass der Bolzen und die Niethülse einstückig ausgebildet sind.

Bevorzugterweise weist der Setzkopf und/oder der zum Schließkopf umgeformte Verformungsbereich eine Vergleichsfestigkeit auf, die größer ist als eine Gewindeauszugskraft des Außengewindes, wobei die Vergleichsfestigkeit insbesondere maximal 50% höher, insbesondere maximal 25% höher als die Gewindeauszugskraft ist. Der Setzkopf und der Verformungsbereich können dann relativ dünn ausgebildet werden, was sich positiv in einer geringen Masse auswirkt.

Auch ist von Vorteil, wenn die Niethülse zumindest im Bereich von Setzkopf und/oder Verformungsbereich ein Material aufweist, bei dem das Verhältnis zwischen Elastizitätsgrenze und Bruchdehnung mindestens 10%, vorzugsweise mindestens 12% beträgt. Die Elastizitätsgrenze, die auch als 0,2-Prozent-Dehngrenze oder mit der Abkürzung R_{p,0,2} bezeichnet wird, ist diejenige mechanische Spannung, bei der die auf die Anfangslänge der Probe bezogene bleibende Dehnung nach Entlastung 0,2% beträgt.

Bei der Verwendung eines Werkstoffs mit dem genannten Verhältnis verwendet man einen höherfesten Werkstoff, bei dem man mit einer geringeren Wandstärke die gleichen mechanischen Eigenschaften wie bei bisher bekannten Blindnietschrauben erreichen kann.

Vorzugsweise weist die Niethülse zwischen dem Setzkopf und dem Verbindungsbereich mindestens zwei unterschiedliche Wandstärken auf. Man kann eine dünnere Wandstärke verwenden, um die Masse der Blindnietschraube zu verringern.

Hierbei ist bevorzugt, dass die Niethülse angrenzend an den Setzkopf eine geringere Wandstärke als angrenzend an den Verbindungsbereich aufweist. Ein Bereich, der an den Setzkopf angrenzt, wird beim Setzen der Blindnietschraube zumindest teilweise in das Fügegut eingesetzt und wird dann vom Fügegut radial nach außen stabilisiert. In diesem Fall kann man eine relativ geringe Wandstärke verwenden, ohne die Fähigkeit der Blindnietschraube, eine bestimmte Last zu tragen, zu schwächen. Bevorzugterweise weist zumindest ein Abschnitt der Niethülse auf seinem Innen- und/oder Außenumfang eine Form auf, die von einer Zylinder- oder Konusform abweicht. Eine derartige Abweichung kann beispielsweise dadurch gebildet werden, dass die Form des Umfangs durch ein Polygon, eine Wendelform oder mit Rippen gebildet ist. Es ist auch möglich, hier radial nach außen weisende Stege zu verwenden. Wenn man die abweichende Form im Verbindungsbereich verwendet, wird die Festigkeit des Verbindungsbereichs in eine radiale Richtung verstärkt, so dass man bei einer ausreichenden Festigkeit nur wenig Material für den Verbindungsbereich verwenden muss.

In einer bevorzugten Ausgestaltung weist der Bolzen einen Hohlraum auf. Auch dies spart Material und damit Masse ein. Die Lasttrage-Eigenschaften des Bolzens werden durch einen Hohlraum praktisch nicht oder jedenfalls nicht nennenswert negativ beeinflusst.

Die Erfindung betrifft eine Anordnung mit einer Blindnietschraube, wie zuvor beschrieben, und, insbesondere, mit einer Mutter mit einem Innengewinde, bei der das Innengewinde maximal vier Gewindegänge aufweist.

Mit maximal vier Gewindegängen kann die Mutter in axialer Richtung sehr kurz gehalten werden. Dies spart wiederum Material und damit Masse ein. Bei vier Gewindegängen ist eine ausreichende Befestigungskraft gegeben. Hierbei ist bevorzugt, dass das Innengewinde eine erste Steigerung und das Außengewinde eine zweite Steigerung aufweist, wobei sich die erste Steigerung und die zweite Steigerung um mindestens 2% unterscheiden. Damit ist zwar ein Aufschrauben der Mutter auf den Gewindeabschnitt möglich. Es ergibt sich aber ein Verspannen des Innengewindes auf dem Außengewinde, so dass die Lasttrageeigenschaften der einzelnen Gewindegänge etwas stärker aneinander angeglichen werden als bei einer Gewindepaarung, bei der die beiden Steigungen gleich sind.

Die Erfindung wird im Folgenden anhand von bevorzugten Ausführungsbeispielen in Verbindung mit den Zeichnungen beschrieben. Hierin zeigen:
- Fig. 1: eine Anordnung mit einer Blindnietschraube und einer Mutter,
- Fig. 2: eine abgewandelte Form einer Blindnietschraube,
- Fig. 3: verschiedene Ausführungsformen eines Bolzens der Blindnietschraube und
- Fig. 4: eine dritte Ausführungsform einer Blindnietschraube.

In allen Figuren sind die gleichen oder einander entsprechende Elemente mit den gleichen Bezugszeichen versehen. Sofern nicht anders angegeben, sind Merkmale, die nur bei einzelnen Ausführungsformen dargestellt sind, auch bei den anderen Ausführungsformen verwendbar.

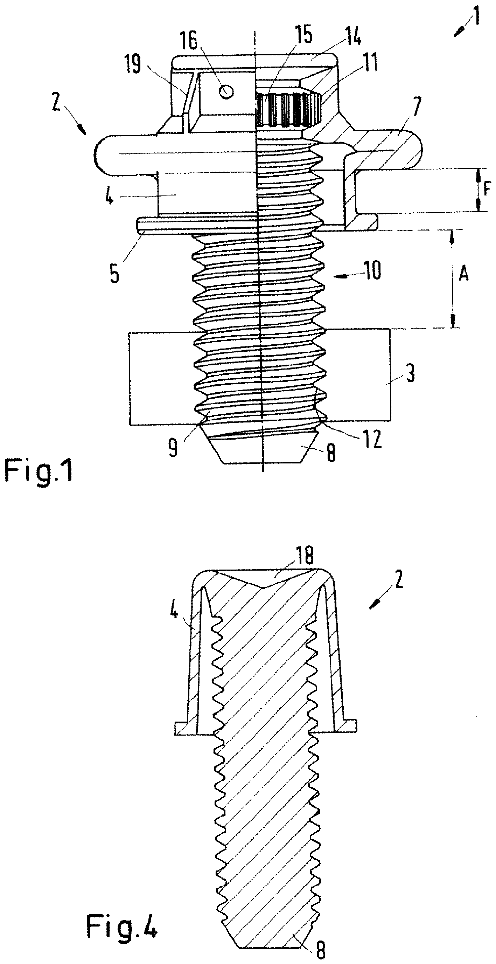

Fig.1 zeigt eine Anordnung 1 mit einer Blindnietschraube 2 und einer Mutter 3.

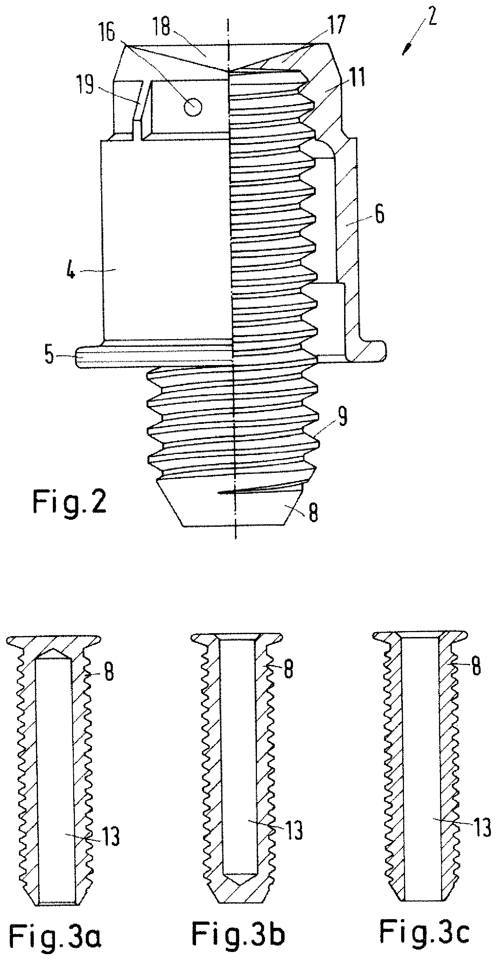

Die Blindnietschraube 2 weist eine Niethülse 4 mit einem Setzkopf 5 und einem Verformungsbereich 6 (Fig. 2) zum Ausbilden eines Schließkopfs 7 (Fig. 1) auf. Die Blindnietschraube 2 weist ferner Bolzen 8 mit einem Außengewinde 9 auf, der mit einem Gewindeabschnitt 10 aus dem Setzkopf 5 vorsteht und in einem Verbindungsbereich 11 mit der Niethülse 4 verbunden ist.

Eine derartige Blindnietschraube 2 ist in der Regel für einen genau spezifizierten Anwendungszweck vorgesehen. In Fig. 1 sind daher zwei Kenngrößen dargestellt, die für die jeweilige Blindnietschraube 2 wesentlich sind.

Es handelt sich zum einen um eine Fügegutdicke F. Die Länge der Niethülse 4 ist auf die Fügegutdicke F abgestimmt, um die korrekte Ausbildung des Schließkopfs 7 sicherzustellen. Das Fügegut kann beispielsweise ein Blech oder ein anderes blechartiges Element sein. Es kann sich auch um einen Stapel aus zwei oder mehr derartiger Elemente handeln, die beim Setzen der Blindnietschraube 2 auch miteinander verbunden werden.

Zum anderen handelt es sich um eine Anschraubgutdicke, also die Dicke eines Guts, der mithilfe der Blindnietschraube 2 an dem Fügegut befestigt werden soll. Die Anschraubdicke bildet damit einen Anschraubgut-Sollbereich A. In gewissen Grenzen kann man bei dem Anschraubgut eine kleine Variation der Dicke zulassen. Der Anschraubgut-Sollbereich A definiert dann die maximal zulässige Dicke des bestimmungsgemäßen Anschraubguts.

Man dimensioniert die Blindnietschraube so, dass der Bolzen 8 im gesetzten Zustand der Blindnietschraube 2, also nach Ausbildung des Schließkopfs 7, mit seinem Gewindeabschnitt 10 maximal so weit aus der Niethülse 4 auf der Seite des Setzkopfs 5 vorsteht, dass das Außengewinde nach dem Aufsetzen des Anschraubguts mit maximal vier vollständigen Gewindegängen über das Anschraubgut übersteht. Ein Zuschlag von 1mm ist gegebenenfalls gestattet. Die in Fig. 1 dargestellte konische Spitze des Bolzens 8, die gewindefrei ist, bleibt bei dieser Betrachtung außen vor. Mit anderen Worten ist der Gewindeabschnitt, also der aus der Niethülse 4 vorstehende Teil des Außengewindes 9, maximal vier Gewindegänge plus 1 mm länger als der Anschraubgut-Sollbereich A.

Damit stehen für die Befestigung des Anschraubguts zwar nur vier Gewindegänge zur Verfügung. Da bei einer Schraubverbindung zwischen einer Mutter und einem Gewindebolzen aber ohnehin drei Gewindegänge die meiste Last tragen, lässt sich auch mit vier Gewindegängen eine ausreichende Lasttrageeigenschaft erreichen.

Die Mutter 3 weist ein Innengewinde 12 und maximal 4 Gewindegänge auf. Das Innengewinde 12 hat eine Steigung, die sich von der Steigung des Außengewindes 9 unterscheidet. Der Unterschied beträgt mindestens 2%, maximal jedoch 5%. Damit ist es möglich, die Mutter 3 auf den Bolzen 8 aufzuschrauben, auch wenn hierzu ein erhöhtes Moment erforderlich ist. Die beiden Gewinde 9, 12 verspannen sich dabei etwas gegeneinander, so dass die Lasten gleichmäßiger auf die einzelnen Gewindegänge verteilt werden.

Beim Ausbilden des Schließkopfs 7 wird der Bolzen 8 aus der Niethülse etwas herausgezogen. Bei ungünstigen Verhältnissen zwischen dem Anschraubgut-Sollbereich A und der Fügegutdicke F kann es dann vorkommen, dass mit der oben angegebenen Dimensionierungsvorschrift der Gewindeabschnitt 10 beim Setzen der Blindnietschraube, also im unverformten Zustand der Niethülse 4 zu kurz ist, um mit einem Werkzeug am Außengewinde 9 des Bolzens 8 anzugreifen, um die zum Ausbilden des Schließkopfs 7 erforderliche Zugkraft aufzubringen.

Es gibt daher eine zweite Bedingung für die Länge des über die Niethülse 4 vorstehenden Gewindeabschnitts. Im unverformten Zustand (Fig. 2) der Niethülse muss der Gewindeabschnitt mit mindestens vier Gewindegängen über den Setzkopf 5 vorstehen. Es kann in diesem Fall vorkommen, dass der Gewindeabschnitt 10 mit mehr als vier Gewindegängen aus dem Anschraubgut vorsteht. Dennoch wird die Masse der Blindnietschraube 2 minimiert.

Der Bolzen 8 ist, wie dies in verschiedenen Ausgestaltungen der Fig. 3 zu erkennen ist, mit einem Hohlraum 13 ausgebildet. Der Hohlraum kann entweder von einer Stirnseite (Fig. 3a) oder von der entgegengesetzten Stirnseite (Fig. 3b) ausgehen oder er kann den Bolzen 8 über seine gesamte Länge durchsetzen. Auch dies spart Masse.

Bei der Ausgestaltung nach Fig. 1 weist der Bolzen 8 einen Kopf 14 auf, der von der dem Setzkopf 5 abgewandten Seite an der Niethülse anliegt. Der Bolzen 8 weist im Befestigungsbereich eine gewindefreie Haltekontur 15 in Form einer Riffelung auf, auf die die Niethülse 4 im Verbindungsbereich 11 eingeprägt ist.

Die Niethülse 4 weist im Verbindungsbereich mindestens eine Öffnung 16 auf. Auch dies spart Material ein.

In Fig. 2 ist eine gegenüber Fig. 1 abgewandelte Ausgestaltung dargestellt, bei der der Bolzen 8 im Verbindungsbereich 11 in die Niethülse 4 eingeschraubt ist. Der Bolzen 8 liegt dann an einer Bolzenanlagewand 17 an. Die Bolzenanlagewand kann einfach ein radial nach innen vorstehender Vorsprung der Niethülse 4 sein. Sie kann jedoch auch, wie dargestellt, als geschlossene Wand ausgebildet sein und eine Kontur aufweisen, die von einer Ebene abweicht. Im vorliegenden Fall weist die Bolzenanlagewand 17 eine kegelförmige Vertiefung 18 auf, bei der wiederum Material eingespart wird.

Wie man in Fig. 2 ohne weiteres erkennen kann, ist die Verbindung zwischen dem Bolzen 8 und der Hülse 4 im Verbindungsbereich durch eine Schraubverbindung gebildet, die maximal zwei Gewindegänge aufweist. Der Bolzen 8 wird in den Verbindungsbereich 11 bis zum Anschlag an die Bolzenanlagewand 17 eingeschraubt und dann durch Aufbringen eines etwas größeren Drehmoments gegen die Bolzenanlagewand 17 verspannt. Eine derartige Verbindung, gegebenenfalls einschließlich eines nachfolgenden Vercrimpens reicht aus, um ein versehentliches Lösen zu verhindern. Darüber hinaus wird beim Aufschrauben der Mutter 3 ein Moment auf dem Bolzen 8 aufgebracht, das den Bolzen 8 weiter in die Hülse 4 einschrauben würde, so dass auch in diesem Fall ein versehentliches Lösen nicht zu befürchten ist.

Wie man in Fig. 2 erkennen kann (die gleiche Ausgestaltung ergibt sich auch bei der Ausführungsform nach Fig. 1) weist die Niethülse 4 zwei unterschiedliche Wandstärken auf. Die Niethülse 4 weist angrenzend an den Setzkopf 5 eine geringere Wandstärke auf als angrenzend an den Verbindungsabschnitt 11. Dargestellt sind zwei diskrete Wandstärken. Es ist aber auch möglich, dass sich die Stärke der Wand der Niethülse 4 kontinuierlich oder nach einer anderen Funktion im Verbindungsbereich 11 zum Setzkopf 5 hin verjüngt.

Insbesondere im Verbindungsbereich 11 weist die Niethülse 4 eine Form auf dem Außenumfang auf, die von einer Zylinder- oder einer Konusform abweicht. Im vorliegenden Fall weist die Niethülse 4 hier eine Reihe von radial nach außen vorstehenden Rippen 19 auf, die den Verbindungsbereich 11 verstärken, ohne dass eine entsprechende Materialdicke über den gesamten Umfang notwendig wäre. Die gleiche Ausgestaltung findet sich auch bei der Ausführungsform nach Fig. 1.

Die Niethülse 4, zumindest aber der Setzkopf 7 und/oder der Verformungsbereich 6, sind aus einem Material gebildet oder weisen ein Material auf, bei dem das Verhältnis zwischen Elastizitätsgrenze und Bruchdehnung mindestens 10%, vorzugsweise mindestens 12% beträgt. Dieses Material bildet also einen höherfesten Werkstoff, der stark belastet werden kann. Bei gleichen Anforderungen an die Belastung lässt sich Material einsparen, indem man den Setzkopf 5 oder die Wand des Verformungsabschnitts 6 relativ dünn ausbildet. Damit ergibt sich insgesamt eine Blindnietschraube 2 mit einer geringen Masse. In allen Ausgestaltungen kann man vorsehen, dass der Setzkopf 5 und/oder der zum Schließkopf 7 umgeformte Verformungsbereich 6 eine Vergleichsfestigkeit aufweist, die größer ist als eine Gewindeauszugskraft des Außengewindes 9. Diese Vergleichsfestigkeit sollte vorzugsweise maximal 50% höher, insbesondere maximal 25% höher als die Gewindeauszugskraft sein. Damit lässt sich wiederum Material einsparen, weil der Setzkopf 5 und/oder der Verformungsbereich 6, der zum Schließkopf 7 ausgebildet werden soll, relativ massearm ausgebildet sein können. Die Blindnietschraube 2 hat folgende Aufgaben: Sie soll zum einen zwei oder mehr Elemente eines Fügeguts zusammenhalten. Sie soll außerdem ein Außengewinde 9 zur Verfügung stellen, um später weitere Elemente hier festschrauben zu können. Die Vergleichsfestigkeit und die Gewindeauszugskraft sind nun so aufeinander abgestimmt, dass bei Versagen des Gewindes zumindest die erste Aufgabe, nämlich das Fügen, noch erhalten bleibt.

Fig. 4 zeigt eine weiter abgewandelte Ausgestaltung einer Blindnietschraube 2, bei der der Bolzen 8 und die Niethülse 4 einstückig ausgebildet sind. Im Übrigen gelten die in den Figuren 1 bis 3 beschriebenen Merkmale. Der Bolzen 8 kann ebenfalls, wie in Fig. 3 dargestellt, mit einem Hohlraum 13 versehen sein.

## Patentansprüche

1. Anordnung mit einer Blindnietschraube (2), einem Fügegut, das eine Fügegutdicke (F) aufweist, und einem Anschraubgut, das eine maximal zulässige Anschraubgutdicke (A) aufweist, wobei die Blindnietschraube (2) eine Niethülse (4), die einen Setzkopf (5) und einen Verformungsbereich (6) zum Ausbilden eines Schließkopfes (7) aufweist, und einen Bolzen (8) mit einem Außengewinde (9), der mit einem Gewindeabschnitt (10) aus dem Setzkopf (5) vorsteht und in einem Verbindungsbereich (11) mit der Niethülse (4) verbunden ist, aufweist, wobei der Gewindeabschnitt (10) bei ausgebildetem Schließkopf (7) maximal 4 Gewindegänge plus 1 mm länger ist als die maximale Anschraubgutdicke (A), der Gewindeabschnitt (10) bei unverformter Niethülse (4) mindestens jedoch 4 Gewindegänge über die Niethülse (4) vorsteht.

2. Anordnung nach Anspruch 1, **dadurch gekennzeichnet, dass** der Gewindeabschnitt (10) bei ausgebildetem Schließkopf (7) maximal 4 Gewindegänge länger ist als die maximale Anschraubgutdicke (A).

3. Anordnung nach Anspruch 1 oder 2, **dadurch gekennzeichnet, dass** der Verbindungsbereich (11) mindestens ein Loch (16) aufweist.

4. Anordnung nach einem der Ansprüche 1 bis 3, **dadurch gekennzeichnet, dass** der Verbindungsbereich (11) an seinem vom Setzkopf abgewandten Ende eine radial nach innen weisende Bolzenanlagewand (17) aufweist, wobei die Bolzenanlagewand (17) vorzugsweise geschlossen ist und insbesondere eine Kontur (18) aufweist, die von einer Ebene abweicht.

5. Anordnung nach einem der Ansprüche 1 bis 4, **dadurch gekennzeichnet, dass** der Verbindungsbereich (11) ein Gewinde mit maximal 2 Gewindegängen aufweist.

6. Anordnung nach einem der Ansprüche 1 bis 3, **dadurch gekennzeichnet, dass** der Bolzen (8) im Verbindungsbereich (11) eine gewindefreie Haltekontur (15) aufweist.

7. Anordnung nach einem der Ansprüche 1 bis 3, **dadurch gekennzeichnet, dass** der Bolzen (8) und die Niethülse (4) einstückig ausgebildet sind.

8. Anordnung nach einem der Ansprüche 1 bis 7, **dadurch gekennzeichnet, dass** der Setzkopf (5) und/oder der zum Schließkopf (7) umgeformte Verformungsbereich (6) eine Vergleichsfestigkeit aufweist, die größer ist als eine Gewindeauszugskraft des Außengewindes (9), wobei die Vergleichsfestigkeit insbesondere maximal 50% höher, insbesondere maximal 25% höher als die Gewindeauszugskraft ist.

9. Anordnung nach einem der Ansprüche 1 bis 8, **dadurch gekennzeichnet, dass** die Niethülse (4) zumindest im Bereich von Setzkopf (5) und/oder Verformungsbereich (6) ein Material aufweist, bei dem das Verhältnis zwischen Elastizitätsgrenze und Bruchdehnung mindestens 10 %, vorzugsweise mindestens 12 % beträgt.

10. Anordnung nach einem der Ansprüche 1 bis 9, **dadurch gekennzeichnet, dass** die Niethülse (4) zwischen dem Setzkopf (5) und dem Verbindungsbereich (11) mindestens zwei unterschiedliche Wandstärken aufweist.

11. Anordnung nach Anspruch 10, **dadurch gekennzeichnet, dass** die Niethülse (4) angrenzend an den Setzkopf (5) eine geringere Wandstärke als angrenzend an den Verbindungsbereich (11) aufweist.

12. Anordnung einem der Ansprüche 1 bis 11, **dadurch gekennzeichnet, dass** zumindest ein Abschnitt der Niethülse (4) auf seinem Innen- und/oder Außenumfang eine Form aufweist, die von einer Zylinder- oder Konusform abweicht.

13. Anordnung nach einem der Ansprüche 1 bis 12, **dadurch gekennzeichnet, dass** der Bolzen (8) einen Hohlraum (13) aufweist.

14. Anordnung nach einem der Ansprüche 1 bis 13 mit einer Mutter (3) mit einem Innengewinde (12), **dadurch gekennzeichnet, dass** das Innengewinde (12) maximal 4 Gewindegänge aufweist.

15. Anordnung nach Anspruch 14, **dadurch gekennzeichnet, dass** das Innengewinde (12) eine erste Steigung und das Außengewinde (9) eine zweite Steigung aufweist, wobei sich die erste Steigung und die zweite Steigung um mindestens 2% unterscheiden.

## Claims

1. An arrangement having a blind rivet screw (2), a joining material which has a joining material thickness (F), and a screw-on material which has a maximum permitted screw-on material thickness (A), wherein the blind rivet screw (2) has a rivet body (4), which has a rivet head (5) and a deformation region (6) for forming a closing head (7), and a bolt (8) having an external thread (9), a thread section (10) of which protrudes out of the rivet head (5) and is connected to the rivet body (4) in a connecting region (11), wherein, when the closing head (7) is formed, the thread section (10) is at most 4 thread turns plus 1 mm longer than the maximum screw-on material thickness (A), but, in the case of the undeformed rivet body (4), the thread section (10) protrudes at least 4 thread turns beyond the rivet body (4) .

2. The arrangement according to Claim 1, **characterized in that**, when the closing head (7) is formed, the thread section (10) is at most 4 thread turns longer than the maximum screw-on material thickness (A).

3. The arrangement according to Claim 1 or 2, **characterized in that** the connecting region (11) has at least one hole (16).

4. The arrangement according to one of Claims 1 to 3, **characterized in that** the connecting region (11) has a radially inwardly facing bolt contact wall (17) at its end facing away from the rivet head, wherein the bolt contact wall (17) is preferably closed and in particular has a contour (18) which deviates from one plane.

5. The arrangement according to one of Claims 1 to 4, **characterized in that** the connecting region (11) has a thread with at most 2 thread turns.

6. The arrangement according to one of Claims 1 to 3, **characterized in that** the bolt (8) has a thread-free holding contour (15) in the connecting region (11).

7. The arrangement according to one of Claims 1 to 3, **characterized in that** the bolt (8) and the rivet body (4) are formed in one piece.

8. The arrangement according to one of Claims 1 to 7, **characterized in that** the rivet head (5) and/or the deformation region (6), which is reshaped to form the closing head (7), has a comparative strength which is greater than a thread withdrawal force of the external thread (9), wherein the comparative strength is in particular at most 50 % higher, in particular at most 25 % higher than the thread withdrawal force.

9. The arrangement according to one of Claims 1 to 8, **characterized in that** the rivet body (4), at least in the region of the rivet head (5) and/or deformation region (6), has a material for which the ratio between elastic limit and elongation at break is at least 10 %, preferably at least 12 %.

10. The arrangement according to one of Claims 1 to 9, **characterized in that** the rivet body (4) has at least two different wall thicknesses between the rivet head (5) and the connecting region (11).

11. The arrangement according to Claim 10, **characterized in that** the rivet body (4) has a smaller wall thickness adjacent to the rivet head (5) than adjacent to the connecting region (11).

12. The arrangement according to one of Claims 1 to 11, **characterized in that** at least one section of the rivet body (4) has a shape on its inner and/or outer circumference, which deviates from a cylindrical or conical shape.

13. The arrangement according to one of Claims 1 to 12, **characterized in that** the bolt (8) has a cavity (13).

14. The arrangement according to one of Claims 1 to 13, having a nut (3) with an internal thread (12), **characterized in that** the internal thread (12) has at most 4 thread turns.

15. The arrangement according to Claim 14, **characterized in that** the internal thread (12) has a first thread lead and the external thread (9) has a second thread lead, wherein the first thread lead and the second thread lead differ by at least 2 %.

## Revendications

1. Agencement avec un rivet fileté aveugle (2), une matière d'assemblage, qui comporte une épaisseur de matière d'assemblage (F) et une matière de vissage, qui comporte une épaisseur de matière de vissage (A) admise au maximum, sachant que le rivet fileté aveugle (2) comporte un manchon de rivet (4), qui comporte une tête de pose (5) et une zone de déformation (6) pour constituer une tête de fermeture (7) et une queue (8) avec un filetage extérieur (9), qui fait saillie avec une section filetée (10) de la tête de pose (5) et est reliée dans une zone de liaison (11) au manchon de rivet (4),
sachant que la section filetée (10) est au maximum de 4 filets plus 1 mm plus longue que l'épaisseur de matière de vissage maximale (A) avec la tête de fermeture constituée (7) et que la section filetée (10) fait toutefois saillie d'au moins de 4 filets au-dessus du manchon de rivet (4) avec le manchon de river (4) déformé.

2. Agencement selon la revendication 1, **caractérisé en ce que** la section filetée (10) est au maximum de 4 filets plus longue que l'épaisseur de la matière de vissage maximale (A) avec la tête de fermeture constituée (7).

3. Agencement selon la revendication 1 ou 2, **caractérisé en ce que** la zone de liaison (11) comporte au moins un trou (16).

4. Agencement selon l'une quelconque des revendications 1 à 3, **caractérisé en ce que** la zone de liaison (11) comporte à son extrémité éloignée de la tête de pose une paroi d'appui de queue (17) radialement tournée vers l'intérieur sachant que la paroi d'appui de queue (17) est de préférence fermée et comporte en particulier un profil (18), qui s'écarte d'un plan.

5. Agencement selon l'une quelconque des revendications 1 à 4, **caractérisé en ce que** la zone de liaison (11) comporte un filetage avec au maximum 2 filets.

6. Agencement selon l'une quelconque des revendications 1 à 3, **caractérisé en ce que** la queue (8) comporte dans la zone de liaison (11) un profil de retenue (15) non fileté.

7. Agencement selon l'une quelconque des revendications 1 à 3, **caractérisé en ce que** la queue (8) et le manchon de rivet (4) sont constitués en une seule pièce.

8. Agencement selon l'une quelconque des revendications 1 à 7, **caractérisé en ce que** la tête de pose (5) et/ou la zone de déformation (6) transformée vers la tête de fermeture (7) comporte une résistance comparative qui est plus grande qu'une force d'arrachement de filetage du filetage extérieur (9), sachant que la résistance comparative est en particulier au maximum de 50 % plus élevée, en particulier au maximum de 25 % plus élevée, que la force d'arrachement de filetage.

9. Agencement selon l'une quelconque des revendications 1 à 8, **caractérisé en ce que** le manchon de rivet (4) comporte au moins dans la zone de la tête de pose (5) et/ou la zone de déformation (6) un matériau pour lequel le rapport entre la limite d'élasticité et l'allongement à la rupture est au moins de 10 %, de préférence au moins de 12 %.

10. Agencement selon l'une quelconque des revendications 1 à 9, **caractérisé en ce que** le manchon de rivet (4) comporte entre la tête de pose (5) et la zone de liaison (11) au moins deux épaisseurs de paroi différentes.

11. Agencement selon la revendication 10, **caractérisé en ce que** le manchon de rivet (4) comporte de façon limitrophe à la tête de pose (5) une épaisseur de paroi plus faible que celle limitrophe à la zone de liaison (11).

12. Agencement selon l'une quelconque des revendications 1 à 11, **caractérisé en ce qu'**au moins une section du manchon de rivet (4) comporte sur sa périphérie intérieure et/ou extérieure une forme qui s'écarte d'une forme cylindrique ou conique.

13. Agencement selon l'une quelconque des revendications 1 à 12, **caractérisé en ce que** la queue (8) comporte un espace creux (13).

14. Agencement selon l'une quelconque des revendications 1 à 13, avec un écrou (3) avec un filetage intérieur (12), **caractérisé en ce que** le filetage intérieur (12) comporte au maximum 4 filets.

15. Agencement selon la revendication 14, **caractérisé en ce que** le filetage intérieur (12) comporte un premier pas et le filetage extérieur (9) comporte un deuxième pas, sachant que le premier pas et le deuxième pas présentent une différence d'au moins 2 %.
